# EUROPÄISCHE PATENTSCHRIFT

(11) **EP 0 518 292 B1**
(45) Veröffentlichungstag und Bekanntmachung des Hinweises auf die Patenterteilung: **11.10.1995**
(21) Anmeldenummer: 92109754.9
(22) Anmeldetag: 10.06.1992
(51) Int. Cl.: F16G 13/16, E02F 3/22, E02F 3/18, E02F 5/14, F16G 13/18

(54) **Schlauchleitung mit mehreren parallelen Schläuchen**
Hose piping with several parallel hoses
Installation de conduites avec plusieurs conduites parallèles

(30) Priorität: 11.06.1991 DE 4119211
(43) Veröffentlichungstag der Anmeldung: 16.12.1992
(73) Patentinhaber: Bauer Spezialtiefbau GmbH, 86522 Schrobenhausen (DE)
(72) Erfinder: Arzberger, Maximilian, W-8894 Igenhausen (DE); Weixler, Leonhard, W-8851 Thierhaupten (DE); Baier, Erwin Rudolf, W-8898 Schrobenhausen (DE)
(74) Vertreter: Weber, Otto Ernst, Dipl.-Phys.

(56) Entgegenhaltungen:
- DE-B- 1 082 644
- GB-A- 2 096 568
- US-A- 2 957 807
- US-A- 3 157 376

## Beschreibung

Die Erfindung betrifft eine Schlauchleitung, die in vorgegebenen Längsabständen Querstege zur Aufnahme von mindestens einem senkrecht zu den Querstegen verlaufenden Schlauch aufweist, um den mindestens einen Schlauch in einem vorgegeben seitlichen Abstand in Bezug auf die Querstege zu halten, wobei die Querstege mit ihren Enden jeweils auf Abstandshaltern ruhen, und Querstege und Abstandshalter in zwei parallelen Strängen auf jeweils ein Zugseil aufgefädelt sind und die Stränge über eine Schlauchtrommel gesteuert auf- und abgewickelt werden.

Insbesondere auf dem Bausektor besteht das Bedürfnis, Werkzeugeinheiten über lange Strecken zu bewegen und dabei Betriebs- und Steuermittel über Schlauchleitungen von einer Station zuzuführen beziehungsweise zu dieser hinzuleiten. So sind z.B. Schlitzwandfräsen bekannt, bei welchen der Fräsrahmen bis zu 100 Meter in das Erdreich abgetäuft wird. Zum Betrieb benötigt man bis zu acht Schlauchleitungen, über welche Hydraulikflüssigkeit zur Steuerung der Fräsenaggregate geleitet wird. Über einen separaten Förderschlauch wird das gelöste Erdreich abgesaugt.

Problematisch ist bei derartig langen Schlauchleitungen, daß beim Ab-/Aufwickeln auf eine Trommel die Schläuche unter geringer oder konstanter Spannung zu halten sind. Bei ungleichem Zug von Hydraulikschlauch und Förderschlauch erhält der Fräsrahmen eine unerwünschte seitliche Ablenkung. Außerdem dürfen die Schläuche keine Quetschungen erleiden.

Eine Schlauchleitung der eingangs genannten Art ist in der DE-B-1 082 644 beschrieben. Bei dem dort beschriebenen Kabelwagen zum Zuführen von elektrischen Kabeln, Schläuchen oder biegsamen Wellen zu ortsveränderlichen Verbrauchern handelt es sich um eine Kabelzuführung, bei der die Leitungen auf der Ober- und Unterseite des Kabelwagens angeordnet sind, so daß sie je nach der Stellung des ortsveränderlichen Verbrauchers vom Kabelwagen abgezogen bzw. wieder von ihm aufgenommen werden. Die Leitungen werden dabei an der Ober- bzw. Unterseite des Kabelwagens flächig aufgenommen.

Der Erfindung liegt die **Aufgabe** zugrunde, eine Schlauchleitung der eingangs genannten Art zu schaffen, die vertikal hängend unter Vermeidung einer Quetschgefahr spiralförmig auf eine Schlauchtrommel auf- und abwickelbar ist.

Die Lösung dieser Aufgabe erfolgt gemäß den kennzeichnenden Merkmalen des Anspruchs 1. Vorteilhafte Weiterbildungen sind in den abhängigen Ansprüchen beschrieben.

Die Erfindung hat den Vorteil, daß alle Zug- und Druckkräfte von den Endstücken und den Abstandshaltern aufgenommen werden. Beim Aufwickeln auf die Trommel kommen die Abstandshalter in Lagen unmittelbar aufeinander zu liegen, wobei aufgrund der vorgegebenen Höhen ein definierter Aufwickeldurchmesser beziehungsweise ein definierter Lasthebelarm gegeben ist. Mit diesen definierten Parametern kann eine genaue Zugregelung erfolgen. Die Schläuche selbst liegen hierbei zug- und druckentlastet übereinander.

Ein Grundgedanke der Erfindung besteht demnach darin, daß die Schläuche in einem leiterartigen, wickelbaren, alle mechanischen Belastungen aufnehmenden Träger angeordnet sind, wobei der Aufwickeldurchmesser durch die Abmessungen der tragenden Elemente in den beiden Leitersträngen jeweils genau vorgegeben und definiert ist.

Dabei ist vorgesehen, daß die Verbindung der Abstandshalter und der Endstücke einer Seite durch ein Zugseil erfolgt, auf welches die Endstücke und Abstandshalter aufgefädelt sind.

Somit erhält man auf einfache Weise eine gelenkige Verbindung dieser Teile mit einer relativ geringen Zugelastizität, die ansonsten bei einer kettenartigen Verbindung der Abstandshalter und Endstücke vorhanden wäre.

Erfindungsgemäß weisen die Abstandshalter und Endstücke die gleiche Form auf. Abstandshalter und Endstücke unterscheiden sich somit lediglich durch die unmittelbare Verbindung der letztgenannten mit den Querstegen.

Weiterhin ist erfindungsgemäß vorgesehen, daß die Abstandshalter und Endstücke an mindestens zwei gegenüberliegenden Seitenflächen ein komplementäres Führungsprofil aufweisen. Man erhält auf diese Weise eine axiale Führung, welche den Auf- und Abbau der Wicklung erleichtert.

Der Wickelvorgang wird dadurch unterstützt und präzisiert, daß die Abstandshalter und Endstücke an den einander zugewandten Flanken eine Wälzkreisabrundung aufweisen. Das hat darüber hinaus den Vorteil, daß der Verschleiß an den Gelenkstellen verringert wird.

Besonders vorteilhaft ist es zu diesem Zweck, daß das Führungsprofil an zwei benachbarten Außenseiten jeweils eine nasenartig beziehungsweise wulstförmig vorstehende Erhebung und an den übrigen beiden Seiten komplementäre Randausnehmungen aufweist. Die Nasen und Ausnehmungen bilden auf der Wicklung und im Längstrang eine stabile, selbstjustierende Verzahnung.

Die Ausrüstung eines Schlauchbündels mit Querstegen kann auf einfache Weise dadurch erfolgen, daß die Querstege mit Durchgangsöffnungen versehen sind, die den Schlauchdurchmessern entsprechen, und daß sie zwei lösbar miteinander verbundene Klemmschellen aufweisen. Die Klemmschellen, die aufgrund der anteiligen öffnungsbögen mit Jochteilen vergleichbar sind, werden auf die Schläuche aufgesetzt und miteinander verbunden. Hierbei kann ein gewisser Anpreßdruck erzeugt werden, um Zugkräfte von den Zugseilen auf die Schläuche zu übertragen beziehungsweise um Gewicht von den Schläuchen auf die Zugseile abzuleiten.

Um bei Verschleiß oder Beschädigung eines Schlauches zu vermeiden, daß der Schlauch über seine gesamte Länge ausgewechselt werden muß, besteht eine Weiterbildung der Erfindung darin, daß ein separater, mit Durchtrittsöffnungen versehener, leistenförmiger Flanschträger vorhanden ist, der zwischen zwei Querstegen und parallel hierzu angeordnet ist, und an welchem beidseitig Schlauchenden befestigbar sind. Man kann auf diese Weise mit Hilfe von zwei derartigen Flanschträgern Schlauchabschnitte festlegen, innerhalb welchen ein Schlauchaustausch erfolgen kann. Vorzugsweise sind die Flanschträger endseitig in den Zugseilen geführt oder gehalten.

Zusätzlich oder alternativ dazu können auch einzelne Querstege in diesem Sinne als Flanschträger ausgebildet sein.

Eine besonders einfache Auswechslung von Schlauchabschnitten kann dadurch erfolgen, daß die Querstege und/oder die separaten Flanschträger mit Flanschhälften versehen sind, die lösbar an den Durchgangsöffnungen angebracht sind. Diese Flanschhälften, die in Längsrichtung der Querstege/Flanschträger oder quer dazu auf deren Breitseiten aufgesetzt und verschraubt werden, ermöglichen auch bei beengten Raumverhältnissen eine ausreichende Befestigung, ohne daß sie über die Außenabmessungen des betreffenden Trägers vorstehen.

Bei besonders engen Schlauchabständen ist es vorteilhaft, daß zwei Flanschhälften für benachbarte Durchgangsöffnungen einstückig ausgebildet sind.

Nachfolgend wird die Erfindung anhand eines in der Zeichnung dargestellten Ausführungsbeispieles weiter beschrieben.
- Fig. 1: zeigt eine perspektivische Ansicht einer Schlitzwandfräse.
- Fig. 2: zeigt eine Draufsicht und einen Teilschnitt eines Quersteges einer Schlauchleitung gemäß Fig. 1.
- Fig. 3 bis 5: zeigen jeweils eine Ansicht eines Abstandshalters der Schlauchleitung gemäß Fig. 1 in Schlauchrichtung und quer dazu.
- Fig. 6: zeigt einen achsparallelen Teilquerschnitt durch eine Schlauchtrommel gemäß Fig. 1.
- Fig. 7: zeigt einen Teilquerschnitt durch die Schlauchtrommel gemäß Fig.1 in Achsrichtung.
- Fig. 8: zeigt schematisch eine Draufsicht auf einen Flanschträger.
- Fig. 9 und 10: zeigen schematisch eine Draufsicht jeweils auf einen Flansch für den Flanschträger gemäß Fig. 8, und
- Fig. 11: zeigt einen Querschnitt durch die Schlauchtrommel in Achsrichtung.

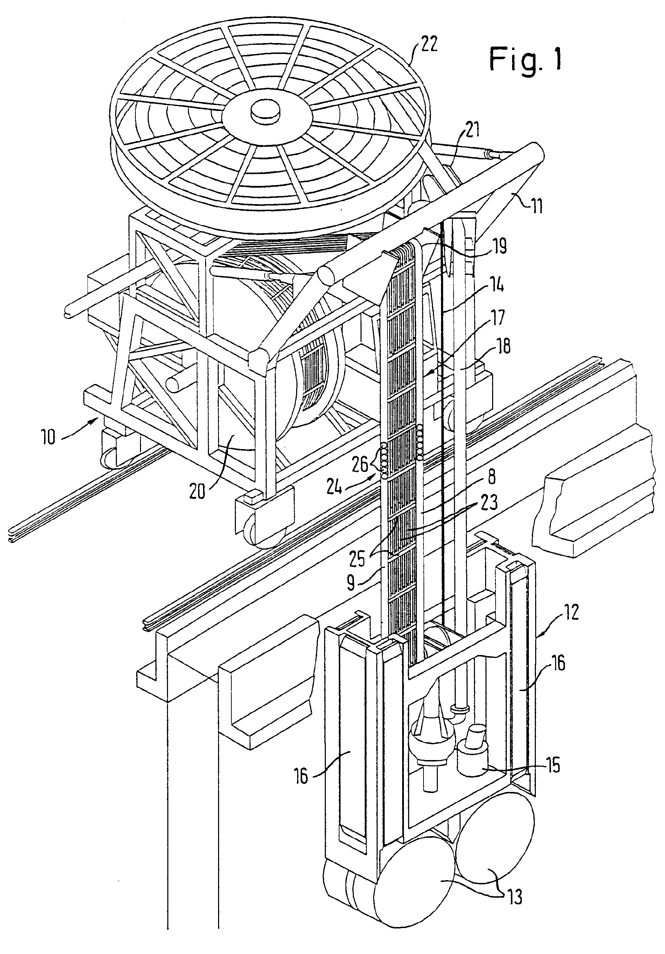

Die Schlitzwandfräse gemäß Fig. 1 umfaßt im hier vorliegenden Beispiel einen schienengeführten Wagen 10 mit einem Ausleger 11, an welchem über ein Tragseil 14 ein Fräsrahmen 12 aufgehängt ist. Am Fräsrahmen 12 befinden sich zwei Paar Fräsräder 13, die von zwei Hydromotoren 15 angetrieben werden.

Eine Seitensteuerung des Fräsrahmens 12 innerhalb eines Schlitzes erfolgt mit Hilfe von hydraulisch betätigten Steuerklappen 16. Die zugehörigen Hydraulikaggregate (nicht dargestellt) und die Hydromotoren 15 werden über eine Schlauchleitung 17 aus dem Wagen 10 heraus ver-/entsorgt. Außerdem wird über einen weiteren Schlauch 18 Erdreich, das von den Fräsrädern 13 gelöst und zerkleinert wurde, an die Oberfläche abgesaugt. Unterstützt wird dieser Absaugvorgang dadurch, daß der Schlitz mit Stützflüssigkeit (Bentonit) gefüllt ist.

Die Schlauchleitung 17 und der Schlauch 18 liegen in einer geraden Linie beidseitig neben dem Seil 14. Die Schlauchleitung 17 wird über eine am Ausleger 11 befestigte Rolle 19 zu einer vertikal angeordneten Schlauch-Trommel 20 auf den Wagen 10 umgelenkt. In gleicher Weise wird der Schlauch 18 über Umlenkrollen 21 zu einer horizontal liegenden weiteren Trommel 22 auf den Wagen 10 geführt. Das Seil 14 kommt von einer wagenseitigen Winde (nicht dargestellt).

Beim Vorschub des Fräsrahmens 12, also beim Absenken, kommt es darauf an, daß der Zug in der Schlauchleitung 17 und im Schlauch 18 gleich ist, damit der Fräsrahmen 12 keine seitliche Auslenkung erfährt.

Die Winde sowie die Antriebe der beiden Trommeln 20,22 müssen daher genau synchronisiert sein. Es ist erforderlich, daß insbesondere die Abwicklung der Schlauchleitung 17 von der Trommel 20 genau gesteuert werden kann. Eine definierte Wegstrecke bezüglich einer vorgegebenen Trommelbewegung ohne unzulässige Schlauchquetschungen wird folgendermaßen gewährleistet:

Die Schlauchleitung 17, die hier aus acht in Reihe nebeneinander angeordneten, parallelen Schläuchen 23 besteht, ist mit einem zugstabilen Träger 24 versehen. Der Träger besteht aus einer Vielzahl von Querstegen 25, welche die Schläuche 23 in vorgegebenen seitlichen Abständen zueinander halten, sowie aus zwei in Schlauchrichtung parallelen Strängen 8,9 mit einer Vielzahl von Abstandshaltern 26, über welche die Querstege 25 endseitig zugfest und gelenkig miteinander verbunden sind.

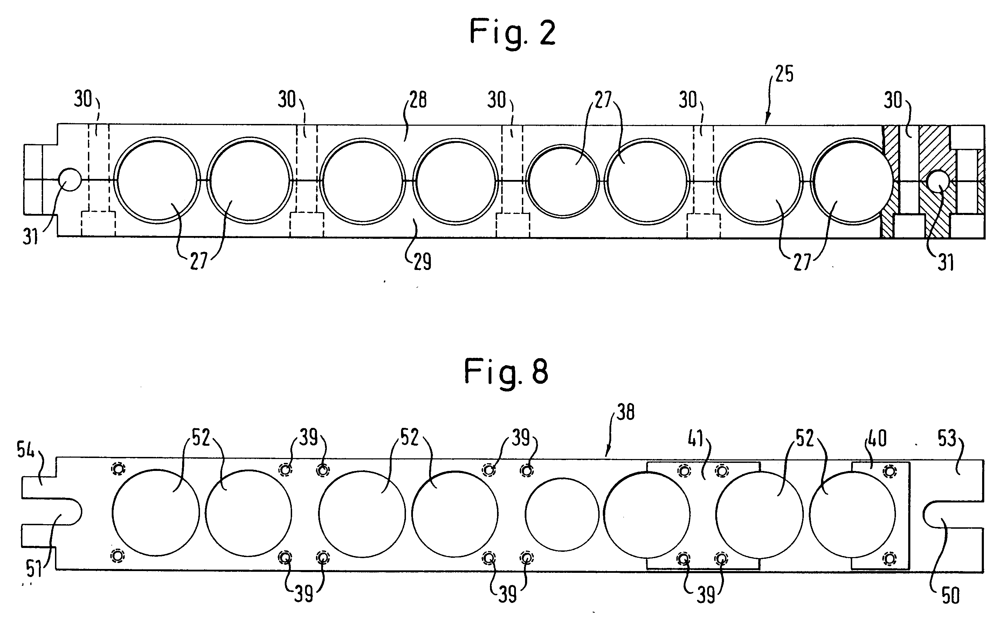

Wie Fig. 2 zeigt, weist jeder Quersteg 25 einer der Anzahl und dem Durchmesser der Schläuche 23 (Fig. 1) entsprechende Anzahl von kreisrunden Durchgangsöffnungen 27 auf. Sie sind ferner aus zwei Klemmschellen 28,29 zusammengesetzt, in welchen die Öffnungen 27 jeweils zur Hälfte ausgeformt sind und welche quer zur Schlauchrichtung miteinander verschraubt sind. In der Fig. sind die zugehörigen Schraubenlöcher 30 gestrichelt dargestellt. An den beiden Stirnseiten liegen in Reihe zu den Öffnungen 27 jeweils eine Bohrung, über welche die Querstege 25 auf zwei Zugseile 31 der Stränge 8,9 aufgereiht sind.

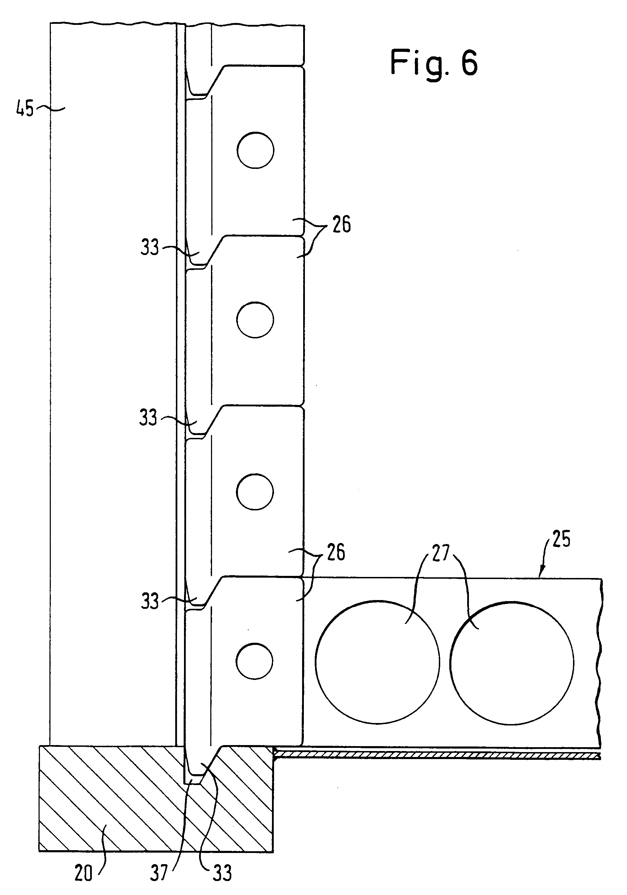

An diesen beiden Enden sind ferner als Endstück jeweils ein Abstandshalter 26 aufgesteckt, wie es in Fig. 6 schematisch dargestellt ist. Der Quersteg 25 ist beispielhaft zur Aufnahme von acht Schläuchen vorgesehen.

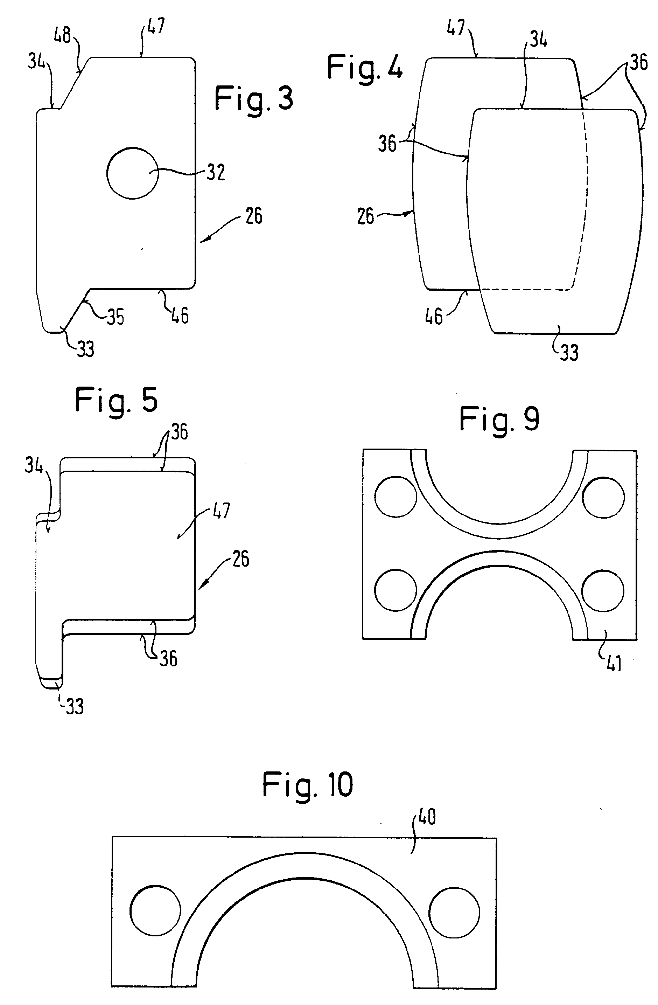

Die Fig. 3 zeigt eine Ansicht eines Abstandshalters 26 in Richtung des Zugseiles, auf welches der Abstandshalter 26 über eine Bohrung 32 aufgefädelt wird. Zwischen zwei benachbarten Querstegen 25 wird eine vorgegebene Anzahl derartiger Abstandshalter 26 angeordnet. In Richtung auf den Trommelmantel der Trommel 20 (Fig. 1) ist der Abstandshalter 26 mit einer Stützfläche 46 sowie mit einer wulstförmigen Erhebung 33 versehen, die auch als Nase bezeichnet werden kann. Sie liegt in dem hier dargestellten Beispiel an der linken Außenseite. Komplementär dazu liegt auf der gegenüberliegenden Seite eine weitere Stützfläche 47 mit einer Ausnehmung 34, wobei sowohl die Erhebung 33 als auch die Ausnehmung 34 mit einer Abschrägung 35,48 versehen sind. Beim Aufwickeln des Trägers 24 auf die Trommel 20 greifen die Erhebungen von Abstandshaltern 26 einer Schlauchlage in die Ausnehmungen 34 der darunterliegenden Abstandshalter, wobei durch die Abschrägungen 35,48 eine axiale Ausrichtung und ein bündiger Außenabschluß erreicht wird. Auf den Stützflächen 46,47 kommen die Abstandshalter benachbarter Wicklungen in der Trommel 20 zu liegen.

Fig. 4 zeigt, daß diejenigen Seiten beziehungsweise Flächen eines Abstandshalters 26, welche den benachbarten Abstandshaltern gegenüberliegen, zur Bildung eines Wälzkreises 36 abgerundet sind. Die Fig. 4 zeigt ferner zusammen mit Fig. 5, daß sich die Erhebung 33 und die Ausnehmung 34 in die benachbarten Seiten fortsetzen, so daß auch eine Führung und Verzahnung mit den jeweils in Reihe liegenden, benachbarten Abstandshaltern gebildet wird.

In Verbindung mit den Zugseilen wird auf diese Weise insgesamt eine gelenkige und in Trommelachsrichtung verschiebefeste Verbindung erreicht.

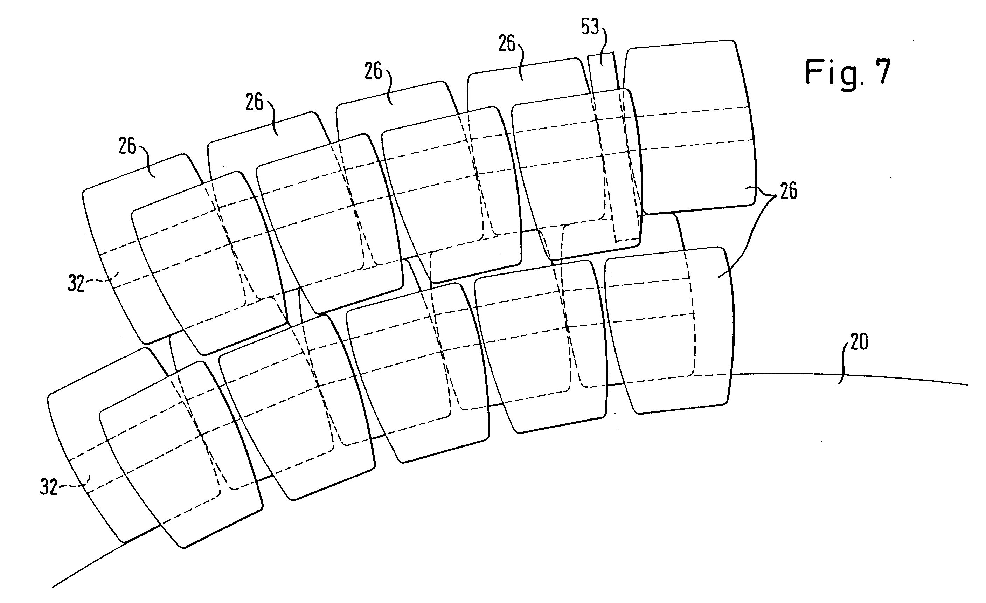

In Fig. 6 und Fig. 7 wird schematisch die Anordnung von Abstandshaltern 26 in einer Wicklung auf der Trommel 20 dargestellt. In der untersten Lage liegt beispielhaft ein Quersteg 25, an dessen Ende ein Abstandshalter 26 anliegt. Zur Aufnahme der Erhebungen 33 der untersten Lage ist der Trommelmantel mit einer entsprechenden Rille 37 versehen. Eine linksseitig Bordscheibe ist mit 45 bezeichnet.

Es wird ersichtlich, daß die Höhe der Abstandshalter 26 quer zur Schlauchrichtung größer ist als die Schlauchdurchmesser und die Breite der Querstege 25, so daß die Schläuche druckentlastet in der Wicklung liegen.

Da die Abstandshalter 26 aller Wicklungen in radialer Richtung exakt aufeinanderliegen, sind die Schläuche der einzelnen Lagen druckentlastet. Durch die vorgegebenen Höhen der einzelnen Abstandshalter 26 sind ferner für jede Lage der Aufwickeldurchmesser und damit der Lasthebelarm genau vorgegeben, so daß die Trommel 20 im Hinblick auf einen bestimmten Zug der gesamten Schlauchleitung 17 exakt steuerbar ist.

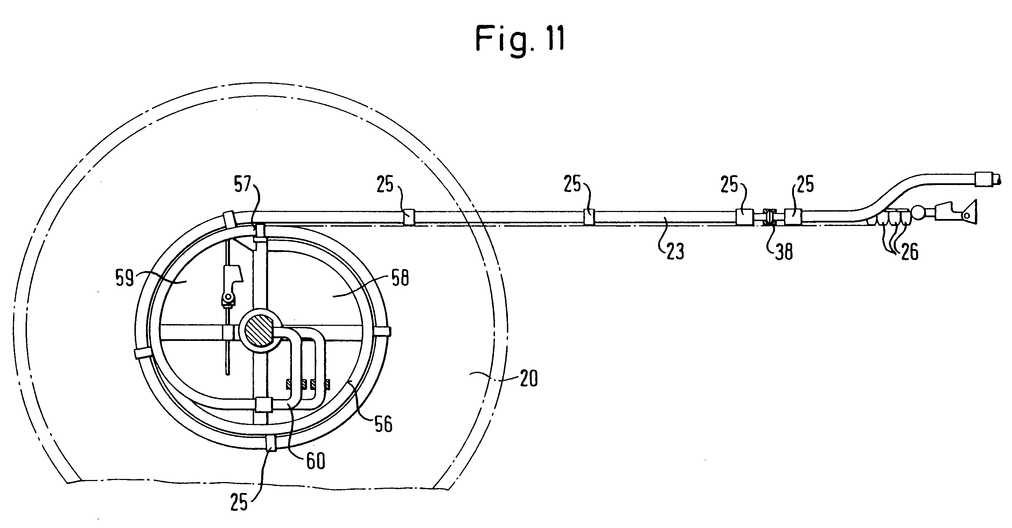

In Fig. 8 ist ein leistenförmiger Flanschträger 38 veranschaulicht, der Bestandteil einer Flanschverbindung für Schlauchabschnitte innerhalb der Schlauchleitung 17 ist. Er kann anstelle oder zusätzlich zu den Querstegen 25 eingesetzt werden.

Der Flanschträger 38 ist mit Gewindelöchern 39 zum beidseitigen Aufschrauben von Flanschhälften 40 (gemäß Fig. 10) beziehungsweise Doppelflanschhälften 41 (gemäß Fig. 9) versehen. Die Doppelflanschhälften 41 kommen zwischen zwei benachbarten Durchtrittsöffnungen bzw. angesetzten Schläuchen zu liegen, wobei sie jeweils eine Hälfte der beiden Schläuche umgreifen. Die Flanschhälften 40 befinden sich an den beiden Stirnseiten der Flanschträger 38.

Der Flanschträger 38 kann wie die Querstege 25 in die Stränge 8,9 integriert werden. Im dargestellten Beispiel ist er alternativ endseitig mit Schlitzen 50,51 versehen, mit welchen er auf die Zugseile aufgesetzt wird. Die zugehörigen Leistenenden 53,54 kommen dabei jeweils zwischen zwei Abstandshaltern 26 zu liegen, wie in Fig. 7 veranschaulicht ist.

Aus der Querschnittsdarstellung der Trommel 20 gemäß Fig. 11 wird ersichtlich, daß eine Mantelfläche 56 der Trommel 20 in Umfangsrichtung unter Bildung einer Stufe 57 im wesentlichen spiralförmig verläuft. Die Spiralform wird im dargestellten Ausführungsbeispiel durch Aneinandersetzen von zwei Zylinderhälften 58,59 mit unterschiedlichem Durchmesser angenähert. Die Durchmesser-Differenz entspricht der Stufenhöhe und ist so gewählt, daß sie der Höhe der Abstandshalter 26 und der Endstücke entspricht. An der Stufe 57 ist das trommelseitige Ende der Schlauchleitung angeordnet, so daß sich das Aufwickeln der Schlauchleitung auf die Trommel 20 ohne Absatz vollzieht. Anders ausgedrückt, bedeutet dies, daß die Anbindung der Schlauchleitung an der Trommel 20 radial nach innen versetzt ist und ein stufenloser und bündiger Übergang von der Mantelfläche 56 auf die Schlauchleitung erfolgt. Damit wird die Steuerung der Schlauchleitung beim Auf- und Abwickeln erleichtert, weil der jeweilige Lasthebelarm präziser bestimmt werden kann. Mit 60 sind die im Trommelinneren angeordneten Zuleitungen bezeichnet.

## Patentansprüche

1. Schlauchleitung, die in vorgegebenen Längsabständen Querstege (25) zur Aufnahme von mindestens einem senkrecht zu den Querstegen verlaufenden Schlauch (23) aufweist, um den mindestens einen Schlauch (23) in einem vorgegebenen seitlichen Abstand in bezug auf die Querstege (25) zu halten, wobei die Querstege (25) mit ihren Enden jeweils auf Abstandshaltern (26) ruhen, und Querstege (25) und Abstandshalter (26) in zwei parallelen Strängen (8, 9) auf jeweils ein Zugseil (31) aufgefädelt sind und die Stränge (8, 9) über eine Schlauchtrommel (20) gesteuert auf- und abgewickelt werden,
dadurch **gekennzeichnet**,
daß die Querstege (25) jeweils an ihren beiden Enden mit Endstücken versehen sind, die quer zur Schlauchlängsrichtung die gleiche Höhe wie die Abstandshalter (26) und die Endstücke die gleiche Form aufweisen und an ihren Seitenflächen ein komplementäres Führungsprofil aufweisen, so daß die vertikal hängende Schlauchleitung spiralförmig auf der Schlauchtrommel auf- und abwickelbar ist.

2. Schlauchleitung nach Anspruch 1,
dadurch **gekennzeichnet,**
daß das Führungsprofil an zwei benachbarten Außenseiten eine wulstförmige Erhebung (33) und an den zwei übrigen Seiten eine komplementäre Ausnehmung (34) umfaßt.

3. Schlauchleitung nach einem der vorhergehenden Ansprüche,
dadurch **gekennzeichnet,**
daß die Abstandshalter (26) und die Endstücke an den einander zugewandten Flanken eine Wälzkreisabrundung (36) aufweisen.

4. Schlauchleitung nach einem der vorhergehenden Ansprüche,
dadurch **gekennzeichnet,**
daß die Querstege (25) zwei lösbar miteinander verbundene Klemmschellen (28,29) aufweisen.

5. Schlauchleitung nach einem der vorhergehenden Ansprüche,
dadurch **gekennzeichnet,**
daß die Mantelfläche (56) der Trommel (20) in Umfangsrichtung unter Bildung einer Stufe (57) im wesentlichen spiralförmig verläuft, daß die Stufe (57) die gleiche Höhe hat wie die Abstandshalter (26) und die Endstücke, und daß das trommelseitige Ende der Schlauchleitung an der Stufe (57) angeordnet ist.

6. Schlauchleitung nach Anspruch 5,
dadurch **gekennzeichnet**,
daß die Spiralform durch Aneinandersetzen von zwei Zylinderhälften (58,59) mit unterschiedlichem Durchmesser angenähert ist.

7. Schlauchverbindung nach einem der vorhergehenden Ansprüche,
dadurch **gekennzeichnet,**
daß ein separater, mit Durchtrittsöffnungen (43) versehener, leistenförmiger Flanschträger (38) vorhanden ist, an welchem beidseitig Schlauchenden befestigbar sind.

8. Schlauchleitung nach Anspruch 7,
dadurch **gekennzeichnet**,
daß die Flanschträger (38) wie die Querstege (25) mit Endstücken versehen sind.

9. Schlauchleitung nach Anspruch 7,
dadurch **gekennzeichnet**,
daß die Flanschträger (38) endseitig in den Zugseilen geführt oder gehalten sind.

10. Schlauchleitung nach einem der Ansprüche 7 bis 9,
dadurch **gekennzeichnet,**
daß die Querstege (25) und/oder die Flanschträger (38) mit Flanschhälften (40,41) vesehen sind, die lösbar an den Durchtrittsöffnungen (43) angebracht sind.

11. Schlauchleitung nach Anspruch 10,
dadurch **gekennzeichnet**,
daß zwei Flanschhälften für benachbarte Durchgangsöffnungen einstückig ausgebildet sind.

12. Schlauchleitung nach einem der vorhergehenden Ansprüche,
dadurch **gekennzeichnet**,
daß sie nach Art einer Energieführungsleitung zur Verund Entsorgung einer Schlitzwandfräse verwendet wird.

## Claims

1. Hose line, comprising crossbars (25) at predetermined longitudinal spacings for receiving at least one hose (23) running perpendicular to the crossbars to keep at least one hose (23) in a predetermined lateral spacing with respect to the crossbars (25), whereby the crossbars (25) in each case rest with the ends on spacers (26) and the cross bars (25) and the spacers (26) are threaded in two parallel strands (8, 9) in each case on a drag cable (31) and whereby the strands (8, 9) are being wound on and off controlled by means of a hose drum (20),
**characterized** in that
the crossbars (25) are in each case provided at their two ends with end pieces, which at right angles to the hose longitudinal direction have the same height as the spacers (26) and
that the end pieces have the same shape and on their lateral faces a complementary guide profile so that the vertically hanging hose line is windable on and off the hose drum in a spiral manner.

2. Hose line according to claim 1,
**characterized** in that
the guide profile comprises on two adjacent outsides a bulge-like protuberance (33) and on the two remaining sides a complementary recess (34).

3. Hose line according to any of the preceding claims,
**characterized** in that
the spacers (26) and the end pieces have a pitch-circle rounding (36) on facing flanks.

4. Hose line according to any of the preceding claims,
**characterized** in that
the crossbars (25) have two detachably interconnected clamp straps (28, 29).

5. Hose line according to any of the preceding claims,
**characterized** in that
the circumferential surface (56) of the drum (20) circumferentially has a largely spiral configuration, accompanied by the formation of a step (57), that the step (57) has the same height as the spacers (26) and the end pieces and
that the drum-side end of the hose line is located at the step (57).

6. Hose line according to claim 5,
**characterized** in that
the spiral shape is approximated by joining two cylinder halves (58, 59) with different diameters.

7. Hose line according to any of the preceding claims,
**characterized** in that
a separate, ledge-like flange carrier (38) having passage openings (43) is provided, to which hose ends can be fixed at both sides.

8. Hose line according to claim 7,
**characterized** in that
the flange carriers (38) are like the crossbars (25) provided with end pieces.

9. Hose line according to claim 7,
**characterized** in that
the flange carriers (38) are terminally guided or held in the drag cables.

10. Hose line according to any of the claims 7 to 9,
**characterized** in that
the crossbars (25) and/or the flange carriers (38) are provided with flange halves (40, 41), which are detachably fitted to the passage openings (43).

11. Hose line according to claim 10,
**characterized** in that
two flange halves for adjacent passage openings are constructed in one piece.

12. Hose line according to any of the preceding claims,
**characterized** in that
it is used in the manner of an energy guide line for the supply and removal with respect to a slotted wall milling cutter.

## Revendications

1. Guide pour tuyau souple, qui comprend, à des espacements longitudinaux préfixés, des pièces transversales (25) servant à recevoir au moins un tuyau souple (23) orienté perpendiculairement aux pièces transversales, afin de maintenir le ou les tuyaux souples (23) à un espacement transversal préfixé vis-à-vis des pièces transversales (25), ces pièces transversales (25) reposant à chacune de leurs extrémités sur une entretoise de maintien (26), les pièces transversales (25) et les entretoises de maintien (26) étant enfilées sur deux câbles de traction (31) respectifs associés de façon à former deux brins parallèles (8, 9), ces brins (8, 9) étant enroulés et déroulés sur un tambour (20) pour tuyau souple,
caractérisé en ce que
les pièces transversales (25) sont pourvues d'une pièce d'extrémité à chacune de leurs deux extrémités, les pièces d'extrémité présentant, transversalement à la direction longitudinale du ou des tuyaux souples, la même hauteur que les entretoises de maintien (26), ces pièces d'extrémité présentant la même configuration et comportant des formes profilées de guidage complémentaires sur leurs surfaces latérales, de sorte que le guide pour tuyau souple, qui pend verticalement, peut être enroulé et déroulé en spirale sur le tambour pour tuyau souple.

2. Guide pour tuyau souple selon la revendication 1,
caractérisé en ce que la forme profilée de guidage comporte une partie surélevée (33) en forme de bourrelet sur deux côtés extérieurs voisins et un évidement complémentaire (34) sur les deux autres côtés.

3. Guide pour tuyau souple selon l'une des revendications précédentes,
caractérisé en ce que, sur leurs flancs qui se font face, les entretoises de maintien (26) et les pièces d'extrémité ont une forme arrondie circulaire de roulement.

4. Guide pour tuyau souple selon l'une des revendications précédentes,
caractérisé en ce que les pièces transversales (25) comportent deux coquilles de serrage (28, 29) qui sont réunies entre elles d'une manière séparable.

5. Guide pour tuyau souple selon l'une des revendications précédentes,
caractérisé en ce que, suivant la direction périphérique, la surface d'enveloppe (56) du tambour (20) s'étend pratiquement en spirale en formant un épaulement (57) en ce que l'épaulement (57) a la même hauteur que les entretoises de maintien (26) et les pièces d'extrémité et en ce que l'extrémité du guide pour tuyau souple située du côté du tambour est disposée sur l'épaulement (57).

6. Guide pour tuyau souple selon la revendication 5,
caractérisé en ce que la forme en spirale est obtenue de manière approchée par l'application l'une sur l'autre de deux moitiés de cylindre (58, 59) présentant des diamètres différents.

7. Guide pour tuyau souple selon l'une des revendications précédentes, caractérisé en ce qu'il est prévu un porte-bride (38), séparé et en forme de barre, qui est pourvu d'ouvertures de passage (43) et sur lequel peuvent être fixées, des deux côtés, des extrémités de tuyau souple.

8. Guide pour tuyau souple selon la revendication 7, caractérisé en ce que, de même que les pièces transversales (25), les porte-bride (38) sont pourvus de pièces d'extrémité.

9. Guide pour tuyau souple selon la revendication 7, caractérisé en ce que les porte-bride (38) sont guidés ou maintenus en leurs extrémités dans les câbles de traction.

10. Guide pour tuyau souple selon l'une des revendications 7 à 9,
caractérisé en ce que les pièces transversales (25) et/ou les porte-bride (38) sont pourvus de moitiés de brides (40, 41) qui sont appliquées manière détachable sur les ouvertures de passage (43).

11. Guide pour tuyau souple selon la revendication 10, caractérisé en ce que deux moitiés de bride sont formées d'une pièce pour constituer des ouvertures de passage voisines.

12. Guide pour tuyau souple selon l'une des revencations précédentes,
caractérisé en ce qu'il est utilisé comme conduite de transport d'énergie pour l'alimentation et l'évacuation d'une fraise pour paroi de coupure de taille.
